# DEMANDE DE BREVET EUROPEEN

(11) **EP 1 503 559 A1**
(43) Date de publication de la demande: **02.02.2005**
(21) Numéro de dépôt: 03291860.9
(22) Date de dépôt: 28.07.2003
(51) Int. Cl.: H04L 29/06, G06K 19/07, G06K 7/00

(54) **Procédé de détection automatique de protocole de transmission pour objet portable de type carte à puce ou clé à puce**

(71) Demandeur: Canal + Technologies, 75906 Paris Cedex 15 (FR)
(72) Inventeur: Condemine, Olivier, Canal + Technologies, 75015 Paris (FR)
(74) Mandataire: Weihs, Bruno

(57) **Abrégé**

Le mode de détection de protocole mis en oeuvre au sein de l'objet portable comprend les étapes suivantes:
a) après émission d'une réponse (E2) à la mise sous tension (E1) de l'objet portable, recevoir de la part du dispositif d'interface un signal initial;
b) échantillonner, dans l'objet portable, ledit signal initial selon au moins l'une de première et seconde cadences associées à des premier et second protocoles respectifs (E3);
c) comparer, dans l'objet portable, au moins un échantillon d'un signal d'échantillonnage résultant, à au moins une condition clé de protocole propre à l'un des premier et second protocoles (E4); et
d) en fonction du résultat de la comparaison, traiter dans l'objet portable les données ainsi échangées selon l'un des premier ou second protocoles de communication.
L'object portable peut être une carte à puce ou une clé à puce.

## Description

La présente invention concerne la détection automatique de protocole de transmission pour objet portable du type carte à puce ou clé à puce.

Elle trouve une application générale dans l'échange de données entre un objet portable et un dispositif d'interface et, plus particulièrement, l'échange de données entre un récepteur/décodeur utilisé pour désembrouiller en réception des programmes de télévision embrouillés et un objet portable du type carte à puce ou clé à puce d'un abonné.

Aujourd'hui, la majorité des cartes à puces du marché répondent à une norme spécifique, définie notamment dans les documents ISO/CEI 7816-3 et -4. Cette norme concerne notamment le protocole de transmission entre la carte à puce et le dispositif d'interface avec lequel elle coopère.

Du fait de cette norme, une multitude d'outils et de logiciels existent pour la réalisation des dispositifs d'interface tels que des lecteurs de cartes à puce, des pilotes de commande, des outils de test et de validation, des machines de personnalisation de cartes, etc.

En pratique, la norme prévoit que le protocole de transmission par défaut et les éventuels autres protocoles de transmission offerts par la carte sont indiqués au dispositif d'interface par l'intermédiaire d'un paramètre, dénommé T, qui est acheminé dans la réponse de la carte à la mise sous tension de ladite carte. La norme prévoit également la possibilité pour le dispositif d'interface de sélectionner au moins un autre protocole de transmission que celui initialement retenu par la carte.

Par ailleurs, on connaît des applications telle que la télévision à péage, qui utilise des objets portables à puce possédant des formats non standardisés, par exemple, sous la forme de clés et qui travaillent selon des protocoles différents de ceux proposés dans la norme mentionnée ci avant.

Par exemple, de telles applications concernent les récepteurs/décodeurs dits analogiques de type SYSTER (Marque déposée), déployés par exemple en France pour désembrouiller en réception des programmes de télévision embrouillés.

Pour de tels objets portables à puce qui ne possèdent pas de format et de protocole standardisés et qui sont généralement produits à relative petite échelle, le coût de revient peut être très élevé.

De plus, le test et l'intégration de tels objets portables à puce ne sont pas facilités par le fait qu'aucun outil standard ne peut être utilisé.

La présente invention apporte justement une solution à ces problèmes.

Elle porte sur un procédé de traitement de données échangées entre un objet portable et un dispositif d'interface.

Selon une définition générale de l'invention, le procédé comprend un mode de détection de protocole mis en oeuvre au sein et par l'objet portable dans lequel il est prévu les étapes suivantes :
a) après émission d'une réponse à la mise sous tension de l'objet portable, recevoir de la part du dispositif d'interface un signal initial ;
b) échantillonner, dans l'objet portable, ledit signal initial selon au moins l'une de première et seconde cadences associées à des premier et second protocoles respectifs ;
c) comparer, dans l'objet portable, au moins un échantillon d'un signal d'échantillonnage résultant, à au moins une condition clé de protocole propre à l'un des premier et second protocoles ; et
d) en fonction du résultat de la comparaison, traiter dans l'objet portable les données échangées selon l'un des premier ou second protocoles de communication.

Grâce au procédé selon l'invention, l'objet portable est capable de gérer au moins deux protocoles de transmission dont l'un est typiquement normalisé selon une norme désirée telle que la norme ISO 7816-3 ou analogue, et l'autre, non normalisé, par exemple, celui du protocole SYSTER (Marque déposée).

La sélection du type de protocole de transmission est faite automatiquement par l'objet portable lors de la réception du signal initial transmis par le dispositif d'interface, juste après la mise sous tension de l'objet portable. Le dispositif d'interface ne prend aucune décision concernant la sélection du protocole de transmission. Ainsi, si l'objet portable est dans un mode de fonctionnement selon le protocole SYSTER, il sera remédié à l'incapacité de ce protocole SYSTER à gérer un basculement du fonctionnement de l'objet portable vers un autre protocole de type ISO en prévoyant les étapes du procédé énoncées ci-dessus.

Le procédé selon l'invention permet d'exploiter des outils standards largement répandus (lecteurs de cartes, outils de personnalisation, outils de tests), tout en permettant à l'objet portable de répondre à un protocole de transmission différent de celui conforme à la norme ISO et spécifique à un protocole propriétaire, tel que celui proposé par les récepteurs/décodeurs analogiques de télévision de type SYSTER (Marque déposée).

Le procédé selon l'invention supporte aussi bien un protocole spécifique qu'un protocole normalisé sans pour autant devoir gérer des paramètres de configuration lors de la personnalisation de l'objet portable. Il n'y a ainsi aucune incidence sur les spécifications externes de l'application embarquée.

En pratique, l'objet portable est une carte à puce implémentant des protocoles conforme à la norme ISO 7816-3 ou analogue (pour les tests, etc...), et un protocole de communication de type SYSTER (Marque déposée) (pour application à la télévision numérique).

Selon une réalisation, l'étape b) consiste à échantillonner ledit signal initial selon les première et seconde cadences tandis que l'étape c) consiste à comparer au moins un échantillon respectif de chacun des deux signaux d'échantillonnage résultants à des première et seconde conditions clés respectives, chaque condition clé étant propre à l'un respectif des premier et second protocoles.

Selon une autre réalisation, l'étape b) consiste à échantillonner le signal initial selon la première cadence ou la seconde cadence, correspondant respectivement aux premier et second protocoles, en ce que l'étape c) consiste à comparer au moins un échantillon du signal d'échantillonnage résultant à une condition clé de protocole propre au premier protocole, respectivement second protocole; et en ce que l'étape d) consiste à traiter des données échangées selon le premier protocole, respectivement second protocole, en cas de comparaison positive et selon le second protocole, respectivement premier protocole, en cas de comparaison négative.

Selon une autre caractéristique de l'invention, la première condition clé est relative à la parité du premier caractère échantillonné à la première cadence, tandis que la seconde condition clé est relative à la valeur du bit de poids fort du premier caractère échantillonné à la seconde cadence.

Selon un mode de réalisation, l'unité de temps élémentaire de la cadence conforme est égale à 372/fi, où fi est la fréquence initiale, fournie par le dispositif d'interface, lors de la réponse à la mise sous tension de l'objet portable.

Selon un autre mode de réalisation, l'unité de temps élémentaire de la cadence non conforme est égale à 396/fi.

En pratique selon une première variante, le signal initial série est échantillonne simultanément selon les deux cadences. Deux échantillonnages sont ainsi réalisés « en parallèle » sur le même signal série entrant.

Selon une autre variante, le signal initial série est échantillonné selon une seule des deux cadences.

La présente invention porte également sur un objet portable, apte à échanger des données avec un dispositif d'interface.

Selon une autre caractéristique importante de l'invention, l'objet portable comprend des moyens de traitement aptes, après émission d'une réponse à la mise sous tension de l'objet portable, à recevoir de la part du dispositif d'interface un signal initial ; à échantillonner ledit signal initial selon au moins l'une de première et seconde cadences associées à des premier et second protocoles respectifs, à comparer au moins un échantillon dudit signal initial ainsi échantillonné selon l'une au moins desdites première et seconde cadences à au moins une condition clé de protocole propre à l'un des premier et second protocoles ; et en fonction du résultat de la comparaison, à traiter les données ainsi échangées selon l'un des premier ou second protocoles de communication.

La présente invention a également pour objet un programme d'ordinateur stocké sur un support d'informations comportant des instructions d'un programme permettant la mise en oeuvre du procédé de traitement mentionné ci avant lorsque le programme est chargé et exécuté par un système informatique.

D'autres caractéristiques et avantages de l'invention apparaîtront à la lumière de la description ci-après détaillée, dans laquelle la figure unique est un organigramme illustrant un mode de réalisation du procédé de détection de protocole selon l'invention.

En pratique, le procédé de détection de protocole de transmission selon l'invention consiste en la lecture par échantillonnage d'au moins un échantillon d'un signal initial. Par exemple, ledit au moins un échantillon correspond au premier octet ou caractère du signal initial émis par le dispositif d'interface en réponse à la mise sous tension de la carte à puce. Ce dit au moins un échantillon et lu selon au moins l'une des cadences dont l'une est une cadence propre au protocole d'une norme ISO telle que la norme ISO 7816-3 ou analogue, et l'autre relative à un protocole spécifique propriétaire tel que le protocole SYSTER (Marque déposée).

Deux variantes peuvent être envisagées.

Selon une première variante, il est prévu d'échantillonner le signal initial, par exemple le premier octet reçu en réponse à la mise sous tension, selon les première et seconde cadences. La première cadence est propre au premier protocole (ISO) et la seconde cadence est propre au second protocole (SYSTER). Ces deux protocoles sont associés à deux cadences respectives parce que la durée d'un bit est distincte selon le protocole qui est utilisé.
Ces deux échantillonnages sont réalisés simultanément sur le signal initial qui est reçu sous la forme de bits en série. Les échantillons obtenus à la première cadence sont placés dans une première portion de mémoire, sous la forme d'un premier signal d'échantillonnage, et les échantillons obtenus à la seconde cadence sont placés dans une seconde portion de mémoire, sous la forme d'un premier signal d'échantillonnage.

Le procédé visant à sélectionner le protocole en fonction d'échantillons du signal initial réellement transmis, la réalisation d'un tel procédé n'est rendue possible que par discrimination d'au moins un bit, définissant une condition clé, sur les bits du caractère porté par le signal initial ainsi transmis, quel que soit le protocole.

Le Demandeur a observé que le bit de poids fort du premier caractère remplit la fonction de discrimination recherchée, c'est-à-dire, ici, le bit de parité dans le cas du protocole T=0, conforme à la norme ISO 7816-3, et le « bit n°8 » dans le cas du protocole SYSTER.

En effet, dans le cas SYSTER, le bit n°8 est à la "valeur 1" pour ce qui concerne le premier caractère transmis après un reset de la carte à froid ou à chaud.

Tandis que dans le cas du protocole ISO 7816-3, T=0, le bit de parité dépend des bits b₀ à b₇, composants le caractère transmis. Une grande liberté est offerte quant au choix de la valeur de ce premier caractère. Il peut s'agir, soit de l'octet FF en notation hexadécimale, dans le cas d'un signal initial de sélection de protocole selon la norme ISO, soit de l'octet CLA, pour classe d'instruction, dans le cas d'une commande APDU, pour *"Application Protocol Data Unit',* c'est-à-dire le protocole de données applicatif.

Le Demandeur a observé que le caractère FF est un caractère dont la parité est à l'état zéro. En d'autres termes, l'octet FF est compatible avec le choix de discrimination. En ce qui concerne le choix de la commande, il convient de choisir une classe de commandes appropriée dont la parité sera également à zéro, pour garantir que la discrimination puisse être assurée.

En d'autres termes, il convient que la première commande ait une classe compatible afin de faire basculer le protocole de la carte dans le mode désiré. Les commandes suivantes peuvent avoir valeur quelconque de classe. En effet, l'une des fonctions de ce procédé est de conserver le protocole choisi jusqu'au prochain reset de la carte.

L'unité de temps élémentaire de la cadence initiale est égale à 372/fi, où fi est la fréquence initiale fournie par le dispositif d'interface, lors de la réponse à la mise sous tension de la carte (norme ISO 7816-3).

L'unité de temps élémentaire de la cadence spécifique peut être égale à 396/fi, où fi est égale, dans le cadre du protocole SYSTER, à 3,8 MHz environ, pour un débit binaire d'environ 9600 bits par seconde.

En pratique, les valeurs des unités de temps élémentaires ne sont pas les mêmes pour une même fréquence, la cadence de transmission est ainsi différente selon le dispositif d'interface. Le choix s'effectue sur le protocole ISO de type T=0, c'est-à-dire le protocole de transmission de caractères en *"half duplex"* asynchrone.

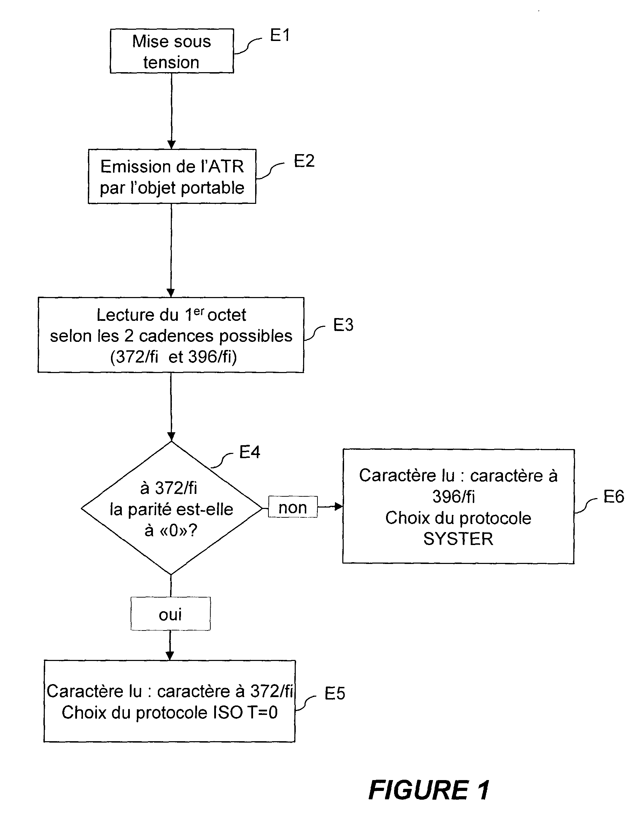

En référence à la **figure 1,** le fonctionnement du protocole de détection selon le premier mode de réalisation peut être le suivant :
Selon l'étape E1, l'objet portable est mis sous tension.
Selon l'étape E2, la carte émet une réponse ATR (pour *"Answer To Reset"*) en réplique à la mise sous tension de la carte.
Selon l'étape E3, il est prévu de lire par échantillonage le premier caractère ou octet selon les deux cadences possibles, soit la cadence conforme au format ISO, soit la cadence spécifique propriétaire du type SYSTER.
Selon la cadence 372/fi, c'est-à-dire la cadence conforme, la parité du premier bit du premier octet est vérifiée (étape E4).

Si celle-ci est égale à zéro, à la cadence conforme, le protocole choisi est celui du protocole ISO correspondant au type T=0 (étape E5).

Selon la cadence non conforme, ici égale à 396/fi, la valeur du bit de poids fort est vérifiée.

Si le bit n°8 du premier caractère est égal à "1", le protocole choisi est celui du protocole spécifique, par exemple, ici, SYSTER (étape E6).

Le mode de détection automatique du protocole de transmission est ici appliqué au protocole ISO de type T=0. Bien évidemment, ce mode de détection pourrait être utilisé pour d'autres protocoles normalisés.

En variante, il est possible de ne tolérer qu'une seule classe de commande compatible avec le procédé de discrimination, afin de donner une plus grande probabilité d'apparition du choix spécifique (ici SYSTER) et de privilégier ce mode de fonctionnement.

Le procédé selon l'invention permet d'utiliser des outils classiques de tests et de validation pour cartes à puce, même avec un objet portable à puce dont l'application testée n'est pas compatible avec la norme en vigueur. Le procédé permet également de gérer au moins deux protocoles de façon permanente, sans nécessiter une gestion de configuration explicite.

Selon le second mode de réalisation, il est prévu l'échantillonnage du signal initial selon une seule des deux cadences qui est propre à l'un des protocoles. On compare alors au moins un échantillon du signal d'échantillonnage résultant à une condition clé de protocole propre au protocole correspondant à la cadence choisie. En résultat, on traite des données échangées selon ce protocole en cas de comparaison positive et selon l'autre protocole en cas de comparaison négative.

Selon ce second mode de réalisation, il est clair qu'en cas de comparaison négative, qui correspond au cas où la cadence d'échantillonnage ne correspond pas au protocole effectivement initié par le dispositif d'interface, les données du signal initial, typiquement un octet ne seront pas récupérés par la carte. Mais cette perte d'information du signal initial dans la majorité des cas ne perturbe pas le fonctionnement ultérieur de l'objet portable dans son mode de fonctionnement selon le protocole dans lequel il va basculer suite à cette comparaison négative.

Lorsque la carte est dans un dispositif d'interface de type norme ISO 7816-3, la carte respecte fidèlement cette norme.

L'invention n'a aucune contrainte d'exploitation. Il n'y a pas, par exemple, de négociation de protocole ni d'incidence sur les spécifications externes de l'application embarquée.

Le procédé selon l'invention peut être mis en oeuvre par un logiciel stocké sur un support d'informations lisibles par un système informatique, éventuellement totalement ou partiellement amovible, notamment ROM, Flash, EEPROM.

Le logiciel comporte des instructions d'un programme d'ordinateur permettant la mise en oeuvre du procédé de traitement selon l'invention lorsque ce programme est chargé et exécuté par un système informatique.

## Revendications

1. Procédé de traitement de données échangées entre un objet portable et un dispositif d'interface, **caractérisé en ce qu'**il comprend un mode de détection de protocole mis en oeuvre au sein et par l'objet portable dans lequel il est prévu les étapes suivantes :
a) après émission d'une réponse à la mise sous tension de l'objet portable, recevoir de la part du dispositif d'interface un signal initial ;
b) échantillonner, dans l'objet portable, ledit signal initial selon au moins l'une de première et seconde cadences associées à des premier et second protocoles respectifs ;
c) comparer, dans l'objet portable, au moins un échantillon d'un signal d'échantillonnage résultant, à au moins une condition clé de protocole propre à l'un des premier et second protocoles ; et
d) en fonction du résultat de la comparaison, traiter dans l'objet portable les données ainsi échangées selon l'un de premier ou second protocoles de communication.

2. Procédé selon la revendication 1, **caractérisé en ce que** l'étape b) consiste à échantillonner ledit signal initial selon les première et seconde cadences tandis que l'étape c) consiste à comparer au moins un échantillon respectif de chacun des deux signaux d'échantillonnage résultants à des première et seconde conditions clés respectives, chaque condition clé étant propre à l'un respectif des premier et second protocoles.

3. Procédé selon la revendication 1, **caractérisé en ce que** l'étape b) consiste à échantillonner le signal initial selon la première cadence ou la seconde cadence, correspondant respectivement aux premier et second protocoles, **en ce que** l'étape c) consiste à comparer au moins un échantillon du signal d'échantillonnage résultant à une condition clé de protocole propre au premier protocole, respectivement second protocole; et **en ce que** l'étape d) consiste à traiter des données échangées selon le premier protocole, respectivement second protocole, en cas de comparaison positive et selon le second protocole, respectivement premier protocole, en cas de comparaison négative.

4. Procédé selon l'une quelconque des revendications précédentes, **caractérisé en ce que** la condition clé de protocole propre au premier protocole est relative à la parité du premier bit du premier caractère..

5. Procédé selon la revendication 1, **caractérisé en ce que** la seconde condition clé de protocole au second protocole est relative à la valeur du bit de poids fort du premier caractère..

6. Procédé selon la revendication 1, **caractérisé en ce que** l'unité de temps élémentaire de la première cadence est égale à 372/fi, où fi est la fréquence fournie par le dispositif d'interface lors de la réponse à la mise sous tension de l'objet portable.

7. Procédé selon la revendication 1, **caractérisé en ce que** l'unité de temps élémentaire de la seconde cadence est égale à 396/fi, où fi est la fréquence fournie par le dispositif d'interface lors de la réponse à la mise sous tension de l'objet portable.

8. Procédé selon l'une quelconque des revendications précédentes, **caractérisé en ce que** l'objet portable est une carte à puce implémentant à la fois un protocole conforme à la norme ISO 7816-3 et un protocole de télévision numérique SYSTER (Marque Déposée).

9. Objet portable apte à échanger des données avec un dispositif d'interface, **caractérisé en ce que** l'objet portable comprend des moyens de traitement aptes, après émission d'une réponse à la mise sous tension de l'objet portable, à recevoir de la part du dispositif d'interface un signal initial ; à échantillonner ledit signal initial selon au moins l'une de première et seconde cadences associées à des premier et second protocoles respectifs, à comparer au moins un échantillon dudit signal initial ainsi échantillonné selon l'une au moins desdites première et seconde cadences à au moins une condition clé de protocole propre à l'un des premier et second protocoles ; et en fonction du résultat de la comparaison, à traiter les données ainsi échangées selon l'un des premier ou second protocoles de communication.

10. Objet portable selon la revendication 9, **caractérisé en ce que** la condition clé propre au premier protocole est relative à la parité du premier bit du premier caractère échantillonné à la cadence conforme à la norme.

11. Objet portable selon la revendication 9, **caractérisé en ce que** la condition clé propre au second protocole est relative à la valeur du bit de poids fort du premier caractère lu à la cadence non conforme.

12. Objet portable selon la revendication 9, **caractérisé en ce que** l'unité de temps élémentaire de la première cadence conforme est égale à 372/fi, où fi est la fréquence fournie par le dispositif d'interface lors de la réponse à la mise sous tension de l'objet portable.

13. Objet portable selon la revendication 9, **caractérisé en ce que** l'unité de temps élémentaire de la seconde cadence est égale à 396/fi, où fi est la fréquence fournie par le dispositif d'interface lors de la réponse à la mise sous tension de l'objet portable.

14. Objet portable selon l'une quelconque des revendications 10 à 13, **caractérisé en ce que** l'objet portable est une carte à puce implémentant à la fois un protocole conforme à la norme ISO 7816-3 ou analogue et un protocole de télévision numérique SYSTER (Marque Déposée).

15. Programme d'ordinateur stocké sur un support d'informations, ledit programme comportant des instructions permettant la mise en oeuvre d'un procédé de traitement selon l'une quelconque des revendications 1 à 8, lorsque ce programme est chargé et exécuté par un système informatique.
